# EUROPÄISCHE PATENTSCHRIFT

(11) **EP 2 394 779 B1**
(45) Veröffentlichungstag und Bekanntmachung des Hinweises auf die Patenterteilung: **06.11.2013**
(21) Anmeldenummer: 11004072.2
(22) Anmeldetag: 17.05.2011
(51) Int. Cl.: B23Q 1/01, B23Q 7/04

(54) **Anordnung und Verfahren zum Bearbeiten von Werkstücken**
Method and procedure for working on machining workpieces
Agencement et procédé destinés au traitement de pièces à usiner

(30) Priorität: 10.06.2010 DE 102010023276
(43) Veröffentlichungstag der Anmeldung: 14.12.2011
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, Dipl.-Ing. (FH), 78598 Königsheim (DE)
(74) Vertreter: Hager, Thomas Johannes

(56) Entgegenhaltungen:
- EP-A1- 0 255 612
- EP-A1- 2 033 725
- EP-A1- 2 082 831
- EP-A2- 1 559 502
- DE-A1- 2 930 006
- DE-U1-202005 021 011
- US-A1- 2004 107 556
- US-A1- 2006 270 540

## Beschreibung

Die vorliegende Erfindung betrifft eine Anordnung sowie eine Verfahren zum Bearbeiten von Werkstücken. Insbesondere betrifft die Erfindung ein vertikales Bearbeitungszentrum zum Fräsen, Drehen und Bohren in Gantry- oder Fahrständer-Bauform mit einem Werkstückwechsler in Portalbauform.

Bearbeitungszentren sind beispielsweise aus der DE 10 2006 024 407 A1 vorbekannt. Bei dieser bekannten Anordnung ist in einer der beiden Seitenwände des Maschinengestells eine Aussparung für den Werkstücktransport vorgesehen. Durch die Aussparung wird die Stabilität des Maschinengestells und somit auch die Stabilität der Längsführung in y-Richtung sehr negativ beeinflusst und die statische, dynamische und thermische Genauigkeit des Bearbeitungszentrums verschlechtert sich. Die Seitenwandungen haben erheblichen Anteil an der Gesamtstabilität des Bearbeitungszentrums, da sie die Längsführung in y-Richtung die für die gesamte werkzeugtragende Baugruppe tragen und so die Basis für die linearen Verfahrbewegungen der werkzeugtragenden Baugruppe in x-, y- und z-Richtung bilden. Des Weiteren wird bei dieser vorbekannten Anordnung jedes einzelne Werkstück von außen in das Bearbeitungszentrum eingefahren. Dies führt zu einer relativ langen Werkstückwechselzeit. Darüber hinaus kann die schwenkbare werkstücktragende Baugruppe des Bearbeitungszentrums nicht beidseitig in den Seitenwandungen gelagert werden.

Ausgehend von diesem Stand der Technik liegt der vorliegenden Erfindung die Aufgabe zugrunde, eine Anordnung sowie ein Verfahren zum Bearbeiten von Werkstücken zu schaffen, wobei einerseits das Maschinengestell möglichst stabil ausgeführt ist und andererseits ein schneller Werkstückwechsel durchgeführt werden kann. Darüber hinaus soll die werkstücktragende Baugruppe innerhalb des Maschinengestells möglichst stabil gelagert sein.

Die Aufgabe wird gelöst durch die Merkmalskombination der unabhängigen Ansprüche. Die Unteransprüche haben vorteilhafte Weiterbildungen der Erfindung zum Inhalt.

Die horizontale Anordnung bezieht sich hier beispielsweise auf einen Werkstattboden. Die x- und y-Richtungen verlaufen somit parallel zum Werkstattboden. Die z-Richtung steht senkrecht zum Werkstattboden.

Der Werkstückwechsler umfasst einen sich in x-Richtung über das Maschinengestell hinaus erstreckenden Längsträger und zumindest einen am Längsträger verfahrbaren und zur gleichzeitigen Aufnahme von zwei Werkstücken ausgebildeten Werkstückgreifer. Der Längsträger erstreckt sich über das Maschinengestell hinaus, so dass außerhalb des Maschinengestells Werkstücke aufgenommen werden können und in das Maschinengestell eingefahren werden können. Erfindungsgemäß ist vorgesehen, dass der Werkstückgreifer um die z-Richtung schwenkbar und in x- und z-Richtung verfahrbar ist. Darüber hinaus ist erfindungsgemäß vorgesehen, dass ein lichter Abstand in y-Richtung zwischen der Trennwand und der Arbeitsraumtür größer dem Störkreisdruchmesser des schwenkenden Werkstückgreifers ist, so dass ein Werkstückwechsel bei geschlossener Arbeitsraumtür zugriffssicher innerhalb des Arbeitsbereichs möglich ist.

Der Störkreis ist jene horizontal liegende Fläche, die der Werkstückgreifer inklusive den beiden aufgenommenen Werkstücken bei einer Drehung, insbesondere um 180°, des Werkstückgreifers um die z-Richtung abfährt. Die Drehung des Werkstückgreifers muss aber keine 180° betragen, je nach Greifergeometrie sind auch andere Gradzahlen möglich. Zum Bespiel beträgt bei einem Werkstückgreifer mit zwei um 90° versetzten Werkstückaufnahmen die Mindestdrehung für den Werkstückwechsel auch nur 90°. Bei Verwendung von Werkstückpaletten und Werkstücken, die nicht über die Werkstückpaletten hinausstehen, definiert sich der Störkreis durch den schwenkenden Werkstückgreifer inklusive der aufgenommenen Werkstückpaletten. Durch die erfindungsgemäße Größe des lichten Abstandes zwischen der Trennwand und der Arbeitsraumtür ist es möglich, dass der Werkstückwechsel durch Schwenken des Werkstückgreifers innerhalb des Arbeitsbereiches der werkzeugtragenden und der werkstücktragenden Baugruppe bei geschlossener Arbeitsraumtür durchgeführt werden kann, so dass sich ein Eingreifschutz und relativ kurze Wechselzeiten ergeben. Der Arbeitsbereich der werkzeugtragenden und der werkstücktragenden Baugruppe wird seitlich durch die beiden Wandungen des Maschinengestells begrenzt. In y-Richtung gesehen vorne und hinten wird der Arbeitsbereich durch eine Trennwand und eine Arbeitsraumtür begrenzt. Der Arbeitsbereich der werkzeugtragenden und der werkstücktragenden Baugruppe ist bei einem Bearbeitungszentrum zum Fräsen, Drehen und Bohren generell immer der Bereich, wo die Bearbeitungsspäne anfallen, d.h., wo das Werkstück durch ein abtragendes Werkzeug bearbeitet wird. Zum Werkstückwechsel wird die Werkzeugspindel aus dem Störkreis bzw. aus der Störkontur des Werkstückgreifers herausgefahren, um danach den Werkstückwechsel ungehindert durch Schwenken des Werkstückgreifers durchführen zu können.

Bevorzugt ist der Werkstückwechsler in x-Richtung seitlich des Bearbeitungszentrums angeordnet, so dass der vordere Zugang in den Arbeitsbereich des Bearbeitungszentrums nicht beeinträchtigt wird.

Der erfindungsgemäße Werkstückwechsler in Portalbauform ermöglicht einen Werkstückwechsel mit relativ wenig Freiheitsgraden. Bevorzugt sind hier die beiden linearen Freiheitsgrade in x- und z-Richtung sowie der rotatorische Freiheitsgrad um die z-Richtung ausreichend.

Es ist bevorzugt vorgesehen, dass der Werkstückgreifer in z-Richtung über eine Oberkante zumindest einer Seitenwandung des Maschinengestells hinaus verfahrbar ist, so dass der Werkstückgreifer von oben zwischen die Seitenwandungen einfahrbar ist. Infolge dieser Ausgestaltung ist in den Seitenwänden des U-förmigen Maschinengestells keine Aussparung für den Werkstücktransport erforderlich und der Werkstückwechsler kann so angeordnet werden, dass der vordere Zugang zum Arbeitsbereich des Bearbeitungszentrums nicht beeinträchtigt wird. Darüber hinaus ermöglicht diese Anordnung eine beidseitige Lagerung der werkstückaufnehmenden Baugruppe, insbesondere einer Schwenkbrücke. Beim Werkstückwechsel fährt die Werkzeugspindel beispielsweise in den hinteren Bereich des Maschinengestells, in die sogenannte Werkzeugwechselposition, um somit den Zugang zum Arbeitsbereich für den Werkstückwechselvorgang freizugeben. Der Werkstückgreifer mit aufgenommenen Werkstücken kann somit ungehindert von oben in den Arbeitsbereich einfahren und ungehindert im Arbeitsbereich schwenken. Die Werkzeugwechselposition ist die hintere Endposition der werkzeugtragenden Baugruppe in y-Richtung. Es sind natürlich auch noch andere Parkpositionen der Werkzeugspindel für den ungehinderten Werkstückwechselvorgang im Bearbeitungszentrum möglich.

Besonders bevorzugt umfasst die Anordnung ein Werkzeugmagazin, welches in y-Richtung hinter der werkstücktragenden Baugruppe angeordnet ist. Das Werkzeugmagazin ist insbesondere drehbar ausgeführt.

Ferner ist bevorzugt vorgesehen, dass die werkstücktragende Baugruppe eine um die x-Richtung schwenkbare Schwenkbrücke umfasst. Die Schwenkbrücke ist bevorzugt an beiden Seitenwandungen des Maschinengestells gelagert. Diese beidseitige Lagerung ist in der erfindungsgemäßen Anordnung möglich, da die Werkstücke von oben zwischen die beiden Seitenwandungen eingebracht werden und die Seitenwandungen folglich keiner Aussparungen bedürfen. Besonders bevorzugt ist auf der Schwenkbrücke ein Werkstückdrehtisch angeordnet. Die Drehachse des Werkstückdrehtisches steht senkrecht zur x-Richtung.

Gemäß einer bevorzugten Ausgestaltung werden die Werkstücke mit Hilfe von normierten Werkstückpaletten transportiert. Dadurch können unterschiedlichste Werkstückgeometrien mit demselben Werkstückgreifer gehalten werden.

Des Weiteren ist bevorzugt vorgesehen, dass der Werkstückwechsler zumindest einen Werkstückrüstplatz, insbesondere mit einem drehbaren Rüstplatztisch, umfasst. Dadurch kann das Werkstück ergonomisch günstig für die Bearbeitung vorbereitet, d.h. gerüstet werden. Bevorzugt erfolgt das Aufspannen der Werkstücke auf die normierten Werkstückpaletten am Werkstückrüstplatz.

Des Weiteren von Vorteil ist es, dass der Werkstückwechsler zumindest einen Werkstückspeicherplatz umfasst. Dadurch kann ein vollautomatisierbarer Betrieb über einen längeren Zeitraum aufrechterhalten werden. Bevorzugt befindet sich der Werkstückspeicherplatz oder die mehreren Werkstückspeicherplätze zwischen dem Rüstplatztisch und dem Bearbeitungszentrum.

In einer weiteren vorteilhaften Ausgestaltung ist vorgesehen, dass der Werkstückwechsler eine vom Werkstattboden unabhängige und auf dem Werkstattboden aufsetzbare Grundplatte und zumindest eine Stütze umfasst, wobei der Längsträger mittels der Stütze auf der Grundplatte montiert ist. Die zumindest eine Stütze erstreckt sich bevorzugt in z-Richtung senkrecht zur Grundplatte. Der Begriff "Werkstattboden" umfasst jegliche Fläche, auf der die erfindungsgemäße Anordnung aufgestellt werden kann. Die Grundplatte hat bevorzugt eine ausreichend große Eigenmasse, so dass das Aufstellsystem, bestehend aus Grundplatte mit Werkstückwechsler aufgrund seines Eigengewichtes und der niedrigen Lage des Gesamtschwerpunktes der erfindungsgemäßen Anordnung in jeder Betriebssituation auch ohne Verankerung mit dem Werkstatt- bzw. Hallenboden ausreichend stand- und kippsicher ist. Die Grundplatte ist bevorzugt zum verankerungsfreien Aufstellen auf dem Werkstattboden ausgebildet. Die Standsicherheit des Werkstückwechslers in Portalbauform ist somit unabhängig von der Betonqualität des Werkstattbodens und unabhängig von der Güte der Verankerungsmittel. Bevorzugt kann somit auf die üblichen Verankerungsmittel, wie beispielsweise Klebe- und Verbunddübel, Spreizdübel und Hinterschnittdübel, verzichtet werden.

Besonders bevorzugt ist vorgesehen, dass der Werkstückrüstplatz und/oder der Werkstückspeicherplatz ausschließlich auf der Grundplatte montiert sind. Der Werkstückwechsler in Portalbauform mit seinem Werkstückrüstplatz und Werkstückspeicherplatz bildet somit zusammen mit der Grundplatte eine zusammenhängende modulare Baueinheit, die in keiner kraft- oder formschlüssigen Verbindung mit dem Bearbeitungszentrum steht. Somit werden Erschütterungen bzw. Vibrationen, die aus den Verfahrbewegungen des Werkstückgreifer zwangsläufig resultieren, nicht auf das Bearbeitungszentrum übertragen. Dies erhöht die Bearbeitungsgenauigkeit des Bearbeitungszentrums.

Des Weiteren ist bevorzugt vorgesehen, dass die Grundplatte aus Beton, insbesondere Polymerbeton, gefertigt ist. Besonders bevorzugt werden dabei Einlegeteile zur Befestigung des Längsträgers und/oder des Werkstückrüstplatzes und/oder des Werkstückspeicherplatzes in den Beton mit eingegossen. Zur Befestigung des Längsträgers werden bevorzugt Stützen verwendet, die an den Einlegeteilen verschraubt sind. Der Polymerbeton enthält im Gegensatz zum normalen Beton ein Polymer (Kunststoff) als Bindemittel, das die Gesteinskörnung (Zuschlag) zusammenhält. Zement wird im Polymerbeton, wenn überhaupt, nur als Füllstoff, also als Erweiterung der Gesteinskörnung, in den Feinstkornbereich hinein, eingesetzt und übernimmt keine Bindewirkung. Gemäß einer weiteren bevorzugten Ausgestaltung wird die Grundplatte mit einer sogenannten verlorenen Form hergestellt.

Weiterhin ist bevorzugt vorgesehen, dass das vertikale Bearbeitungszentrum, insbesondere das Maschinengestell, rutsch- und vibrationshemmende Maschinenschuhe zum verankerungsfreien Aufstellen auf dem Werkstattboden umfasst. Bevorzugt besitzen die Maschinenschuhe jeweils eine Auflagekalotte für den Ausgleich von Bodenunebenheiten. Das Bearbeitungszentrum steht somit unabhängig vom Werkstückwechsler und dessen Grundplatte direkt auf dem Werkstattboden.

Des Weiteren ist bevorzugt vorgesehen, dass der Werkstückwechsler zumindest eine weitere Stütze umfasst, die zum direkten Abstützen des Längsträgers auf dem Werkstattboden ausgebildet ist. Bevorzugt sind zwei Stützen vorgesehen, welche auf der Grundplatte montiert sind und den Längsträger halten. Der Längsträger erstreckt sich über das Bearbeitungszentrum hinaus und wird auf der anderen Seite des Bearbeitungszentrums von dieser optionalen weiteren Stütze direkt gegen den Werkstattboden abgestützt.

Bevorzugt besteht die werkzeugtragende Baugruppe aus einem Längsschlitten, einem Querschlitten und einem Vertikalschlitten. Am Vertikalschlitten ist bevorzugt die Werkzeugspindel mit einer Aufnahme für das Bearbeitungswerkzeug angebracht.

Die Erfindung umfasst des Weiteren ein Verfahren zum Bearbeiten von Werkstücken, wobei eine x-Richtung und eine y-Richtung zueinander senkrecht und horizontal definiert sind und eine z-Richtung senkrecht zur x-Richtung und y-Richtung definiert ist. Das Verfahren umfasst die folgenden Schritte in gegebener Reihenfolge: Einfahren eines Werkstückgreifers zwischen zwei jeweils parallel zur y- und z-Richtung stehende Seitenwandungen eines vertikalen Bearbeitungszentrums, insbesondere in Gantry- oder Fahrständer-Bauform. Absetzen eines ersten Werkstücks in eine werkstücktragende Baugruppe, wobei sich die werkstücktragende Baugruppe zwischen den beiden Seitenwandungen befindet. Bearbeiten des ersten Werkstücks. Aufnehmen des ersten Werkstücks mittels des Werkstückgreifers. Schwenken des Werkstückgreifers um die z-Richtung innerhalb und zwischen der rückseitigen Trennwand und der geschlossenen vorderseitigen Arbeitsraumtür. Absetzen eines zweiten Werkstücks in der werkstücktragenden Baugruppe. Bearbeiten des zweiten Werkstücks. Die im Rahmen der erfindungsgemäßen Anordnung diskutierten vorteilhaften Ausgestaltungen finden entsprechend vorteilhafte Anwendung auf das erfindungsgemäße Verfahren.

Im Folgenden wird die Erfindung anhand eines Ausführungsbeispiels im Detail erläutert. Dabei zeigt:
- Fig. 1: eine erfindungsgemäße Anordnung gemäß einem Ausführungsbeispiel in einer Seitenansicht,
- Fig. 2: die erfindungsgemäße Anordnung gemäß Ausführungsbeispiel in einer ersten Draufsicht,
- Fig. 3: die erfindungsgemäße Anordnung gemäß Ausführungsbeispiel in einer zweiten Draufsicht, und
- Fig. 4: einen Ausschnitt der erfindungsgemäßen Anordnung gemäß Ausführungsbeispiel.

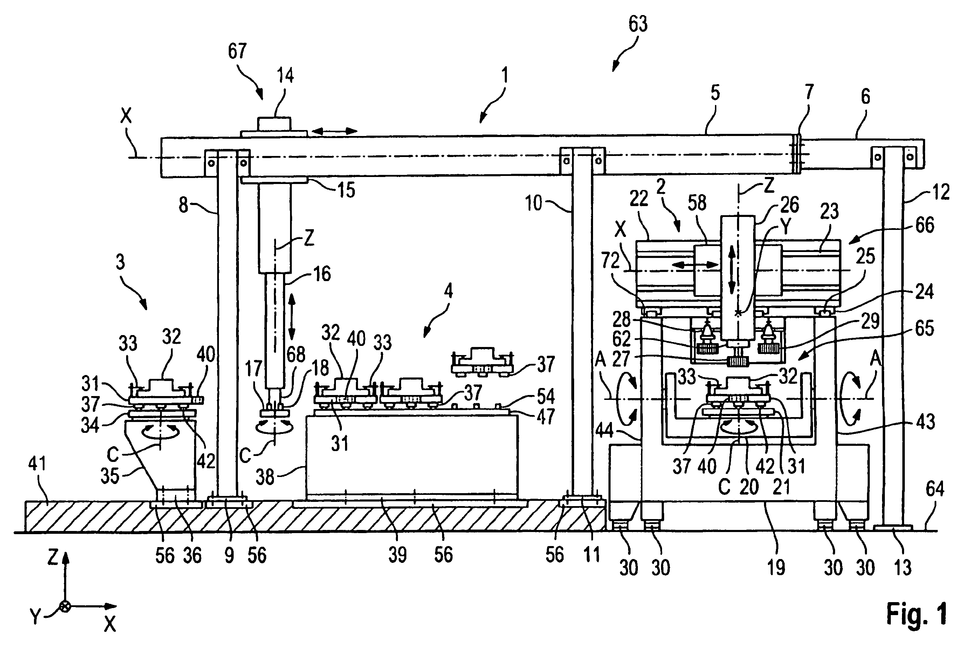

Im Folgenden wird die erfindungsgemäße Anordnung 63 zum Bearbeiten von Werkstücken 32 gemäß dem Ausführungsbeispiel anhand der Fig. 1 bis 4 beschrieben.

Fig. 1 zeigt die erfindungsgemäße Anordnung 63 in einer Seitenansicht. Dabei sind eine x-Richtung und eine y-Richtung zueinander senkrecht und horizontal definiert. Eine z-Richtung ist senkrecht zur x- und y-Richtung definiert. Die x- und y-Richtungen verlaufen parallel zu einem Werkstattboden 64. Die z-Richtung steht senkrecht auf dem Werkstattboden 64. Die Anordnung 63 umfasst ein vertikales Bearbeitungszentrum 2 und einen Werkstückswechsler 1 in Portalbauform.

Das Bearbeitungszentrum 2 setzt sich zusammen aus einem U-förmigen Maschinengestell 19, einer werkstücktragenden Baugruppe 65 und einer werkzeugtragenden Baugruppe 66.

Das U-förmige Maschinengestell 19 umfasst eine erste Seitenwandung 43 und eine zur ersten Seitenwandung 43 parallele und beabstandete zweite Seitenwandung 44. Die beiden Seitenwandungen 43, 44 erstrecken sich im Wesentlichen in z- und y-Richtung. Eine Dicke der beiden Seitenwandungen 43, 44 erstreckt sich in x-Richtung. Die zweite Seitenwandung 44 weist eine Oberkante 72 auf.

Zwischen den beiden Seitenwandungen 43, 44 ist die werkstücktragende Baugruppe 65 angeordnet. Die werkstücktragende Baugruppe 65 umfasst eine Schwenkbrücke 20 und einen Werkstückdrehtisch 21 auf der Schwenkbrücke 20. Die Schwenkbrücke 20 ist an der ersten Seitenwandung 43 und der zweiten Seitenwandung 44 gelagert und kann um die dargestellte A-Achse, welche parallel zur x-Richtung verläuft, geschwenkt werden. Der Werkstückdrehtisch 21 ist verdrehbar um die C-Achse. Die C-Achse steht senkrecht zur A-Achse. Die Lagerung der Schwenkbrücke 20 ist sehr stabil, da sie beidseitig, an der ersten Seitenwandung 43 und der zweiten Seitenwandung 44, ausgeführt ist.

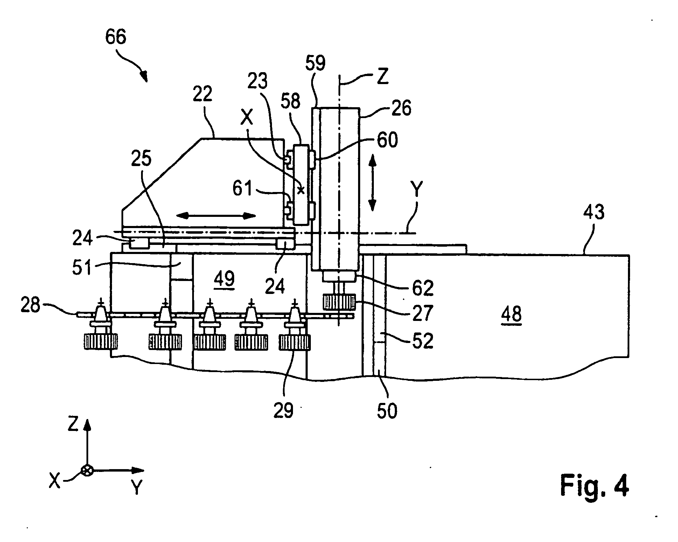

Die werkzeugtragende Baugruppe umfasst eine sich in z-Richtung erstreckende Werkzeugspindel 62. Die Werkzeugspindel 62 ist an einem Werkzeugvertikalschlitten 26 befestigt. Der Werkzeugvertikalschlitten 26 wiederum ist an einem Werkzeugquerschlitten 58 befestigt. Der Werkzeugquerschlitten 58 ist an einem Werkzeuglängsschlitten 22 befestigt. An der Werkzeugspindel 62 befindet sich ein Bearbeitungswerkzeug 27. Mittels des Vertikalschlittens 26 ist das Bearbeitungswerkzeug 27 in z-Richtung linear verfahrbar. Der Werkzeugquerschlitten 58 ermöglicht ein lineares Verfahrens des Bearbeitungswerkzeugs 27 in x-Richtung. Der Werkzeuglängsschlitten 22 ermöglicht ein lineares Verfahren des Bearbeitungswerkzeugs 27 in y-Richtung. Zur linear beweglichen Lagerung der drei Schlitten 26, 58, 22 sind verschiedene Führungsschienen und Führungsschuhe vorgesehen. Teilweise sind diese Elemente in der Detailansicht in Fig. 4 dargestellt. Der Werkzeugvertikalschlitten 26 umfasst eine erste Führungsschiene 59 und zugehörige erste Führungsschuhe 60. Die ersten Führungsschuhe 60 sind am Werkzeugquerschlitten 58 befestigt. Der Werkzeugquerschlitten 58 wiederum umfasst zweite Führungsschuhe 61. Diese gleiten in zweiten Führungsschienen 23 am Werkzeuglängsschlitten 22. Der Werkzeuglängsschlitten 22 umfasst dritte Führungsschuhe 24. Diese dritten Führungsschuhe 24 gleiten in dritten Führungsschienen 25, welche mittels eines Auflagers 51 auf dem Maschinengestell 19, insbesondere auf der ersten und zweiten Seitenwandung 43, 44, befestigt sind.

Um einen schnellen Wechsel der Bearbeitungswerkzeuge zu ermöglichen, umfasst das Bearbeitungszentrum 2 einen Werkzeugmagazinring 28 mit weiteren Bearbeitungswerkzeugen 29.

Das Bearbeitungszentrum 2, insbesondere das U-förmige Maschinengestell 19, steht mittels mehrerer Maschinenschuhe 30 direkt auf dem Werkstattboden 65. Die Maschinenschuhe 30 umfassen jeweils eine Auflagekalotte für den Ausgleich von Bodenunebenheiten.

Der Werkstückwechsler 1 in Portalbauform umfasst eine Grundplatte 41. Auf dieser Grundplatte 41 sind zwei sich in z-Richtung erstreckende Stützen 8, 10 montiert. Diese beiden Stützen 8, 10 tragen einen sich in x-Richtung erstreckenden Längsträger 5. An dem Längsträger 5 ist eine Wechslereinheit 67 geführt. Diese Wechslereinheit 67 umfasst einen Werkstückgreifer 17 mit mehreren Aufnahmebolzen 18.

Die erste Stütze 8 umfasst eine erste Fußplatte 9. Die zweite Stütze 10 umfasst eine zweite Fußplatte 11. In die Grundplatte 41 sind Einlegeteile 56 eingegossen. Mit diesen Einlegeteilen 56 sind die beiden Fußplatten 9, 11 verschraubt. Die Grundplatte 41 besteht bevorzugt aus Polymerbeton und stellt ein vom Werkstattboden 64 unabhängiges Element dar. Durch die Verwendung der Grundplatte 41 bedarf es keiner direkten Verankerung der Stützen mit dem Werkstattboden 64. Die Grundplatte 41 liegt ohne Verankerung auf dem Werkstattboden auf.

In einer optionalen Ausführung umfasst der Träger 5 einen weiteren Längsträger 6. Dieser weitere Längsträger 6 erstreckt sich ebenfalls in x-Richtung und ist mittels einer Verbindungsplatte 7 an den Längsträger 5 angeschraubt. Somit stellt der weitere Längsträger 6 eine Verlängerung des Längsträgers 5 dar. Die erste Stütze 8 und die zweite Stütze 10 sind auf einer Seite des Bearbeitungszentrums 2 aufgestellt. Der weitere Längsträger 6 verlängert den Längsträger 5 über das Bearbeitungszentrum hinaus, so dass auf der anderen Seite des Bearbeitungszentrums 2 der weitere Längsträger 6 mit einer weiteren Stütze 12 direkt gegenüber dem Werkstattboden 64 abgestützt werden kann. Zwischen dem Werkstattboden 64 und der weiteren Stütze 12 befindet sich eine weitere Fußplatte 13.

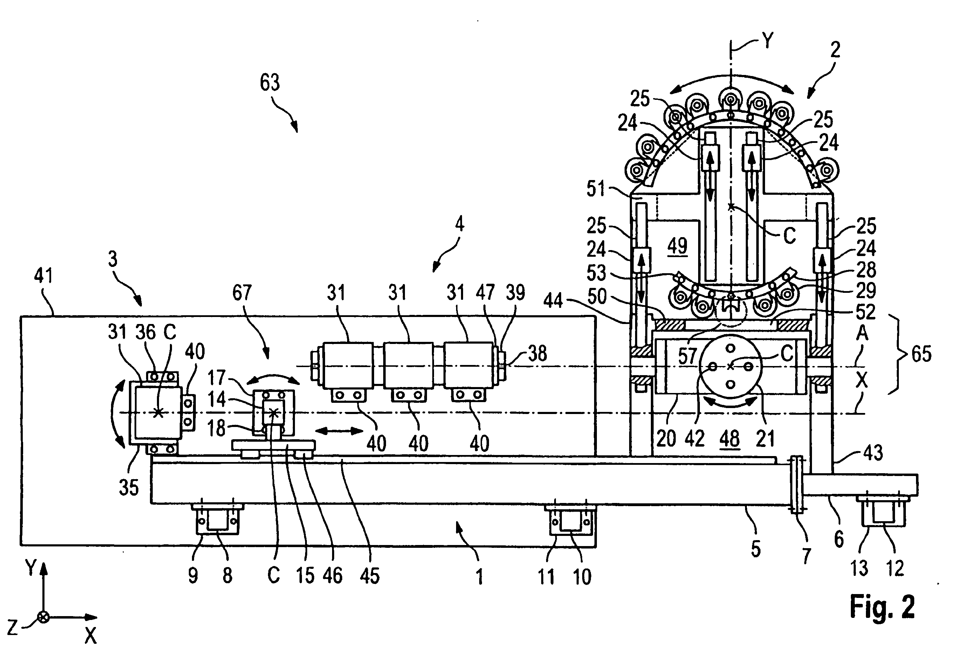

Die Wechslereinheit 67 umfasst einen Wechslerhorizontalschlitten 15. Dieser ist mittels einer vierten Führungsschiene 45 und vierten Führungsschuhen 46 (siehe Fig. 2) in x-Richtung linear verfahrbar auf dem Längsträger 5 gelagert. An dem Wechslerhorizontalschlitten 15 ist in z-Richtung linear verfahrbar ein Wechslervertikalschlitten 16 angebracht. Aus dem Wechslervertikalschlitten 16 erstreckt sich eine Wechslerwelle 68 in z-Richtung. An der Wechslerwelle 68 befindet sich der Werkstückgreifer 17. Die Wechslerwelle 68 und somit der Werkstückgreifer 17 sind um die z-Richtung schwenkbar bzw. drehbar ausgeführt. Der Wechslerhorizontalschlitten 15 umfasst einen Vertikalschlittenträger 14 zur Anbindung des Wechslervertikalschlittens 16.

Des Weiteren umfasst der Werkstückwechsler 1 einen Werkstückrüstplatz 3. Dieser Werkstückrüstplatz 3 umfasst einen Ständer 35 mit einem darauf um die z-Richtung drehbar angeordneten Rüsttisch 34. Der Ständer 35 ist mittels einer Rüstplatzfußplatte 36 auf ein Einlegeteil 56 in der Grundplatte 41 verschraubt. Der drehbare Rüsttisch 34 ist zur Aufnahme einer normierten Werkstückpalette 31 ausgebildet. Die normierte Werkstückpalette 31 umfasst an ihrer Unterseite Festspannhülsen 37. Diese Festspannhülsen 37 wirken mit fluidbetätigbaren Festspannbolzen 42 des Rüsttisches 34 zusammen. Auf der Oberseite der Werkstückpalette 31 sind Werkstückspannmittel 33 vorgesehen. Diese Werkstückspannmittel 33 sind bevorzugt hand- oder fluidbetätigbar. Seitlich der Werkstückpalette 31 erstreckt sich ein Aufnahmefortsatz 40 mit Aufnahmebohrungen. Diese Aufnahmebohrungen erstrecken sich in z-Richtung. Am Werkstückgreifer 17 sind Aufnahmebolzen 18 vorgesehen, welche sich ebenfalls in z-Richtung erstrecken. Diese Aufnahmebolzen 18 können in die Aufnahmebohrungen an der Werkstückpalette 31 eingreifen. Mittels der Werkstückspannmittel 33 wird das Werkstück 32 auf der Werkstückpalette 31 befestigt.

Darüber hinaus umfasst der Werkstückwechsler 1 einen Werkstückspeicherplatz 4. Der Werkstückspeicherplatz 4 ist zwischen dem Werkstückrüstplatz 3 und dem Bearbeitungszentrum 2 angeordnet. Er umfasst einen Speicherplatzständer 38. Dieser ist mittels einer Speicherplatzfußplatte 39 auf Einlegeteilen 56 in der Grundplatte 41 verschraubt. Oben auf dem Speicherplatzständer 38 ist eine Speicherplatzaufnahmeplatte 47 vorgesehen. Auf dieser Speicherplatzaufnahmeplatte 47 befinden sich mehrere Speicherplatzaufnahmebolzen 54. Diese Speicherplatzaufnahmebolzen 54 wirken mit den Festspannhülsen 37 auf der Unterseite der normierten Werkstückpaletten 31 zusammen.

Die Fig. 2 zeigt die erfindungsgemäße Anordnung 1 in Draufsicht. Die Wechslereinheit 67 befindet sich hier in einer Stellung zwischen dem Werkstückrüstplatz 3 und dem Werkstückspeicherplatz 4. Die Draufsicht in Fig. 2 zeigt den Werkzeugmagazinring 28 und dessen Lagerung 53. Der Werkzeugmagazinring 28 hat eine freie Werkzeugwechselposition 57.

Zwischen dem Werkzeugmagazinring 28 und der werkstücktragenden Baugruppe 65 befindet sich eine Trennwand 50. Die Trennwand 50 erstreckt sich im Wesentlichen in z- und x-Richtung von der ersten Seitenwandung 43 zur zweiten Seitenwandung 44.

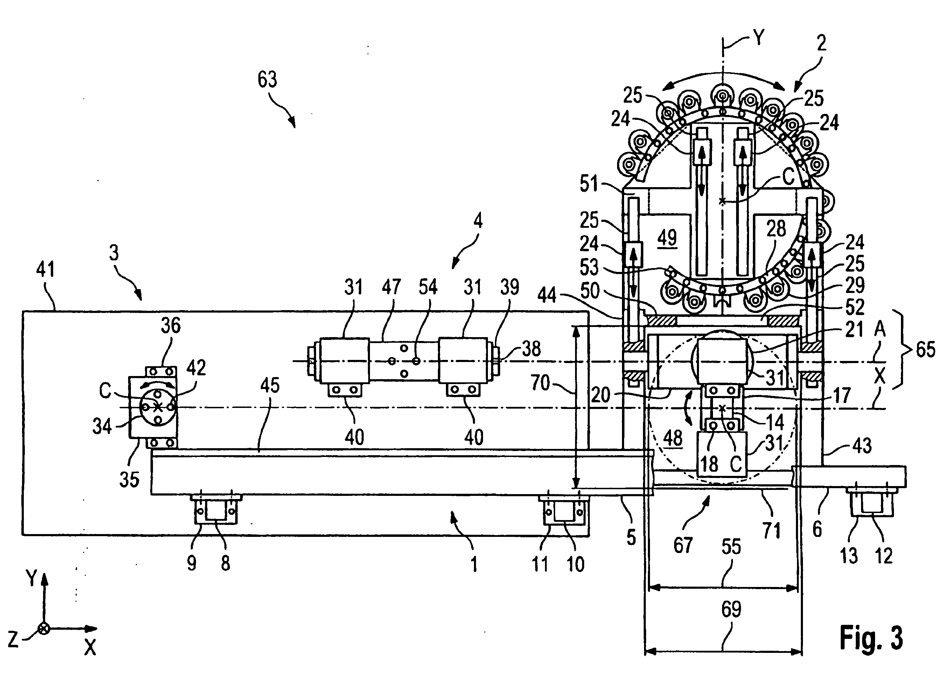

Fig. 3 zeigt ebenfalls die erfindungsgemäße Anordnung 1 in Draufsicht. Hier befindet sich die Wechslereinheit 67 im Bearbeitungszentrum 2. Zur übersichtlichen Darstellung ist hier ein Teil des Längsträgers 5 ausgeblendet dargestellt. Dadurch ist eine Arbeitsraumtür 71 erkennbar. Diese Arbeitsraumtür 71 erstreckt sich ebenfalls in x- und z-Richtung zwischen den beiden Seitenwandungen 43, 44. Der Raum zwischen den beiden Seitenwandungen 43, 44, der Trennwand 50 und der Arbeitsraumtür 71 wird als Arbeitsbereich 48 der werkzeugtragenden Baugruppe 66 und der werkstücktragenden Baugruppe 65 bezeichnet. Der Raum hinter der Trennwand 50 wird als Magazinarbeitsbereich 49 des Werkzeugmagazinrings 28 bezeichnet. In der Trennwand 50 befindet sich eine Öffnung bzw. ein Durchbruch 52. Durch diese Öffnung 52 hindurch kann ein Teil der werkzeugtragenden Baugruppe 66, insbesondere die Werkzeugspindel 62 mit dem Bearbeitungswerkzeug 27, aus dem Arbeitsbereich 48 in den Magazinarbeitsbereich 49 verfahren werden. Die Öffnung 52 kann durch eine nicht dargestellte Tür verschlossen werden, so dass Späne und Kühlschmierstoffe nicht vom Arbeitsbereich 48 in den Magazinarbeitsbereich 49 gelangen können.

In Fig. 3 ist ein Störkreisdurchmesser 55 dargestellt. Durch Schwenken des Werkstückgreifers 17 inklusive der aufgenommenen Werkstücke 32 um zumindest 180° um die z-Richtung definiert sich der Störkreis sowie der Störkreisdurchmesser 55. Dies ist derjenige Bereich, der beim Wechsel der Werkstücke 32 zur Verfügung stehen muss. Erfindungsgemäß ist vorgesehen, dass dieser Werkstückwechsel innerhalb des Arbeitsbereiches 48 stattfindet. Hierzu ist ein erster lichter Abstand 70 in y-Richtung zwischen der Arbeitsraumtür 71 und der Trennwand 50 größer dem Störkreisdurchmesser 55. Des Weiteren ist ein zweiter lichter Abstand 69 in x-Richtung zwischen den beiden Seitenwandungen 43, 44 größer dem Störkreisdurchmesser 55.

Fig. 4 zeigt eine Detailansicht der erfindungsgemäßen Anordnung 1. Insbesondere ist hier die Lagerung des Werkzeuglängsschlittens 22 auf den beiden Seitenwandungen 43, 44 dargestellt. Hierzu befindet sich auf den Seitenwandungen 43, 44 jeweils eine dritte Führungsschiene 25. In diesen dritten Führungsschienen 25 gleiten die dritten Führungsschuhe 24.

Im Folgenden wird der Verfahrensablauf zum Bearbeiten von Werkstücken mittels der hier vorgestellten Anordnung 63 erläutert: Die Werkstücke 32 werden zunächst am Werkstückrüstplatz 30 auf die Werkstückpaletten 31 montiert. Die Wechslereinheit 67 greift mit den Aufnahmebolzen 18 am Werkstückgreifer 17 die Werkstückpaletten 31 und setzt sie in den Werkstückspeicherplatz 4 ein. Vom Werkstückspeicherplatz 4 entnimmt der Werkstückgreifer 17 eine Werkstückpalette und hebt die Werkstückpalette 31 über die Oberkante 72 der zweiten Seitenwandung 44. Dadurch kann ohne einen Durchbruch in den Seitenwandungen 43, 44 das Werkstück 32 zwischen die Seitenwandungen 43, 44 eingebracht werden. Innerhalb des U-förmigen Maschinengestells 19 nimmt der Werkstückgreifer 17mit den noch freien Aufnahmebolzen 18 das bereits bearbeitete Werkstück 32 mit dessen Werkstückpalette 31 auf. Daraufhin wird der Werkstückgreifer 17 innerhalb des Arbeitsbereiches 48 um die z-Achse um 180° gedreht. Dadurch kann auf sehr schnelle Weise bei geschlossener Arbeitsraumtür 71 das Werkstück eingriffsicher gewechselt werden und ein neues Werkstück auf den Werkstückdrehtisch 21 aufgesetzt werden. Der Werkstückgreifer 17 wird mit dem bereits bearbeiteten Werkstück 32 aus dem Bearbeitungszentrum 2 herausgefahren. Daraufhin kann die Werkzeugspindel wieder in den Arbeitsbereich 48 verfahren werden und das nächste Werkstück 32 kann bearbeitet werden.

Mittels der hier vorgestellten Anordnung und dem entsprechenden Verfahren ist es möglich, dass die werkstücktragende Baugruppe 65 sehr stabil, nämlich an zwei Stellen, gelagert ist. Darüber hinaus ist es möglich, dass der Werkstückgreifer 17 innerhalb des Arbeitsbereiches 48 bei geschlossener Arbeitsraumtür 71 dreht. Dadurch wird ein sehr schneller und eingriffsicherer Werkstückwechsel ermöglicht.

## Patentansprüche

1. Anordnung (63) zum Bearbeiten von Werkstücken (32), wobei eine x-Richtung und eine y-Richtung zueinander senkrecht und horizontal definiert sind und eine z-Richtung senkrecht zur x-Richtung und y-Richtung definiert ist, umfassend
- ein Bearbeitungszentrum (2), insbesondere in Gantry- oder Fahrständer-Bauform, mit
- einem Maschinengestell (19), insbesondere in U-Form, mit zwei Seitenwandungen (43, 44) die jeweils parallel zur y- und z-Richtung stehen,
- einer auf oder an den Seitenwandungen (43, 44) gelagerten werkzeugtragenden Baugruppe (66) mit einer in x-, y- und z-Richtung verfahrbaren Werkzeugspindel (62),
- einer zwischen den beiden Seitenwandungen (43, 44) angeordneten werkstücktragenden Baugruppe (65),
- eine rückseitige Trennwand (50) zwischen den beiden Seitenwandungen (43, 44), und
- einer vorderseitigen Arbeitsraumtür (71) zwischen den beiden Seitenwandungen (43, 44), **gekennzeichnet durch**
- einen Werkstückwechsler (1) in Portalbauform mit einem sich in x-Richtung über das Maschinengestell (19) hinaus erstreckenden Längsträger (5) und zumindest einem am Längsträger (5) verfahrbaren und zur gleichzeitigen Aufnahme von zwei Werkstücken (32) ausgebildeten Werkstückgreifer (17),
- wobei der Werkstückgreifer (17) um die z-Richtung schwenkbar und in x- und z-Richtung verfahrbar ist, und
- wobei ein lichter Abstand (70) in y-Richtung zwischen der Trennwand (50) und der Arbeitsraumtür (71) größer dem Störkreisdurchmesser (55) des schwenkenden Werkstückgreifers (17) ist und wobei ein lichter Abstand (69) in x-Richtung zwischen den beiden Seitenwandungen (43, 44) größer dem Störkreisdurchmesser (55) des schwenkenden Werkstückgreifers (17) ist, so dass ein Werkstückwechsel bei geschlossener Arbeitsraumtür (71) zugriffssicher innerhalb des Arbeitsbereiches (48) möglich ist.

2. Anordnung nach einem der vorhergehenden Ansprüche, **dadurch gekennzeichnet, dass** der Werkstückgreifer (17) in z-Richtung über eine Oberkante (72) zumindest einer Seitenwandung (44) hinaus verfahrbar ist, so dass der Werkstückgreifer (17) von oben zwischen die Seitenwandungen (43, 44) einfahrbar ist.

3. Anordnung nach einem der vorhergehenden Ansprüche, **gekennzeichnet durch** ein, insbesondere drehbares, Werkzeugmagazin (28), welches in y-Richtung hinter der werkstücktragenden Baugruppe (65) angeordnet ist.

4. Anordnung nach einem der vorhergehenden Ansprüche, **dadurch gekennzeichnet, dass** die werkstücktragende Baugruppe (65) eine um die x-Richtung schwenkbare, an beiden Seitenwandungen (43, 44) gelagerte Schwenkbrücke (20) umfasst, und insbesondere einen Werkstückdrehtisch (21) auf der Schwenkbrücke (20) umfasst.

5. Anordnung nach einem der vorhergehenden Ansprüche, **dadurch gekennzeichnet, dass** der Werkstückwechsler (1) zumindest einen Werkstückrüstplatz (3), insbesondere mit einem drehbaren Rüstplatztisch (34), umfasst.

6. Anordnung nach einem der vorhergehenden Ansprüche, **dadurch gekennzeichnet, dass** der Werkstückwechsler (1) zumindest einen Werkstückspeicherplatz (4) umfasst.

7. Anordnung nach einem der vorhergehenden Ansprüche, **dadurch gekennzeichnet, dass** der Werkstückwechsler (1) eine vom Werkstattboden (64) unabhängige und auf den Werkstattboden (64) aufsetzbare Grundplatte (41) und zumindest eine Stütze (8, 10) umfasst, wobei der Längsträger (5) mittels der Stütze (8, 10) auf der Grundplatte (41) montiert ist.

8. Anordnung nach einem der Ansprüche 5 bis 7, **dadurch gekennzeichnet, dass** der Werkstückrüstplatz (3) und/oder der Werkstückspeicherplatz (4) auf der Grundplatte (41) montiert sind.

9. Anordnung nach einem der Ansprüche 7 oder 8, **dadurch gekennzeichnet, dass** die Grundplatte (41) aus Beton, insbesondere Polymerbeton, gefertigt ist, wobei insbesondere Einlegeteile (56) zur Befestigung von Längsträger (5) und/oder Werkstückrüstplatz und/oder Werkstückspeicherplatz (4) in den Beton eingegossen sind.

10. Anordnung nach einem vorhergehenden Ansprüche, **dadurch gekennzeichnet, dass** das vertikale Bearbeitungszentrum (2), insbesondere das Maschinengestell (19), rutsch- und vibrationshemmende Maschinenschuhe (36) zum verankerungsfreien Aufstellen auf dem Werkstattboden (64) umfasst.

11. Anordnung nach einem der Ansprüche 7 bis 10, **dadurch gekennzeichnet, dass** der Werkstückwechsler (1) zumindest eine weitere Stütze (12) umfasst, die zum direkten Abstützen des Längsträgers (5) auf dem Werkstattboden (64) ausgebildet ist.

12. Verfahren zum Bearbeiten von Werkstücken (32), mit einer Anordnung gemäß Anspruch 1, mit den folgenden Schritten:
- Einfahren des Werkstügreifers (17) zwischen zwei den Seitenwandungen (43, 44) des Bearbeitungszentrums (2),
- Absetzen eines ersten Werkstücks (32) in die werkstücktragende Baugruppe (65),
- Bearbeiten des ersten Werkstücks (32),
- Aufnehmen des ersten Werkstücks (32) mittels des Werkstückgreifers (17),
- Schwenken des Werkstückgreifers (17) um die z-Richtung innerhalb und zwischen der rückseitigen Trennwand (50) und der geschlossenen vorderseitigen Arbeitsraumtür (71), sowie innerhalb und zwischen den beiden Seitenwandungen (43, 44),
- Absetzen eines zweiten Werkstücks (32) in der werkstücktragenden Baugruppe (65), und
- Bearbeiten des zweiten Werkstücks (32).

## Claims

1. An arrangement (63) for machining workpieces (32), wherein an x-direction and a y-direction are defined relative to each other vertically and horizontally and a z-direction is defined vertically relative to the x-direction and y-direction, comprising
- a machining center (2), particularly provided in gantry or traveling-column design, with
- a machine frame (19), particularly U-shaped, having two side walls (43, 44), each standing parallel to the y- and z-direction,
- a tool-carrying assembly (66) supported on or at the side walls (43, 44) and having a tool spindle (62) movable in x-, y- and z-direction, and
- a workpiece-carrying assembly (65) arranged between the two side walls (43, 44), and
- a rear partition wall (50) between the two side walls (43, 44), and
- a front working-room door (71) between the two side walls (43, 44), and
- a workpiece changer (1) in portal design with a longitudinal beam (5) extending in x-direction beyond the machine frame (19) and at least one workpiece gripper (17) that is movable on the longitudinal beam (5) and configured to simultaneously receive two workpieces (32),
- wherein the workpiece gripper (17) is pivotable around the z-direction and is movable in x- and z-direction, and
- wherein a clear distance (70) in y-direction between the partition wall (50) and the working-room door (71) is greater than the collision circle diameter (55) of the pivoting workpiece gripper (17) and wherein a clear distance (69) in x-direction between the two side walls (43, 44) is greater than the collision circle diameter (55) of the pivoting workpiece gripper (17), so that a workpiece change in the closed state of the working-room door (71) is possible in a secure manner within the working area (48).

2. The arrangement according to any one of the preceding claims, **characterized in that** the workpiece gripper (17) is movable in z-direction beyond an upper edge (72) at least of a side wall (44), so that the workpiece gripper (17) is insertable from above between the side walls (43, 44).

3. The arrangement according to any one of the preceding claims, **characterized by** a, particularly rotatable, tool magazine (28) which is arranged in y-direction behind the workpiece-carrying assembly (65).

4. The arrangement according to any one of the preceding claims, **characterized in that** the workpiece-carrying assembly (65) comprises a pivoting bridge (20) which is pivotable around the x-direction and supported on both side walls (43, 44), and particularly comprises a workpiece turntable (21) on the pivoting bridge (20).

5. The arrangement according to any one of the preceding claims, **characterized in that** the workpiece changer (1) comprises at least one workpiece set-up station (3), particularly with a rotatable set-up station table (34).

6. The arrangement according to any one of the preceding claims, **characterized in that** the workpiece changer (1) comprises at least one workpiece storage station (4).

7. The arrangement according to any one of the preceding claims, **characterized in that** the workpiece changer (1) comprises a base plate (41) which is independent of the workshop floor (64) and can be mounted on the workshop floor (64), and at least one support (8, 10), wherein the longitudinal beam (5) is mounted by means of the support (8, 10) on the base plate (41).

8. The arrangement according to any one of claims 5 to 7, **characterized in that** the workpiece set-up station (3) and/or the workpiece storage station (4) are mounted on the base plate (41).

9. The arrangement according to any one of claims 7 or 8, **characterized in that** the base plate (41) is made of concrete, particularly polymer concrete, wherein particularly insert parts (56) are cast into the concrete for fastening longitudinal beam (5) and/or workpiece set-up station and/or workpiece storage station (4).

10. The arrangement according to any one of the preceding claims, **characterized in that** the vertical machining center (2), particularly the machine frame (19), comprises anti-slip and anti-vibration machine shoes (36) for anchorless mounting on the workshop floor (64).

11. The arrangement according to any one of claims 7 to 10, **characterized in that** the workpiece changer (1) comprises at least one further support (12) which is configured to directly support the longitudinal beam (5) on the workshop floor (64).

12. A method for machining workpieces (32) with an arrangement according to claim 1, comprising the following steps:
- inserting the workpiece gripper (17) between the two side walls (43, 44) of the machining center (2),
- placing a first workpiece (32) in the workpiece-carrying assembly (64),
- machining the first workpiece (32),
- receiving the first workpiece (32) by means of the workpiece gripper (17),
- pivoting the workpiece gripper (17) around the z-direction within and between the rear partition wall (50) and the closed front working-room door (71), and within and between the two side walls (43, 44),
- placing a second workpiece (32) in the workpiece-carrying assembly (65), and
- machining the second workpiece (32).

## Revendications

1. Agencement (63) destiné à usiner des pièces (32), un sens x et un sens y étant définis perpendiculairement et horizontalement l'un à l'autre et un sens z étant défini perpendiculairement au sens x et au sens y, l'agencement (63) comprenant :
- un centre d'usinage (2), notamment sous la forme d'un portique mobile ou montant mobile, avec
- un bâti de machine (19), en particulier en forme de U, avec deux parois latérales (43, 44) qui sont respectivement parallèles aux sens y et z,
- un bloc (66) portant des outils logé sur ou au niveau des parois latérales (43, 44) avec une broche d'outil (62) mobile dans les sens x, y et z,
- un bloc (65) portant des pièces disposé entre les deux parois latérales (43, 44),
- une paroi de séparation (50) côté arrière entre les deux parois latérales (43, 44), et
- une porte d'espace de travail (71) côté avant entre les deux parois latérales (43, 44), **caractérisé par**
- un changeur de pièce (1) en forme de portique avec un longeron (5) s'étendant dans le sens x au-delà du bâti de machine (19) et au moins une pince pour pièce (17) mobile sur le longeron (5) et réalisée pour la réception simultanée de deux pièces (32),
- la pince pour pièce (17) pouvant pivoter autour du sens z et se déplacer dans les sens x et z, et
- une distance intérieure (70) dans le sens y entre la paroi de séparation (50) et la porte d'espace de travail (71) étant supérieure au diamètre de cercle d'interférence (55) de la pince pour pièce (17) pivotante et une distance intérieure (69) dans le sens x entre les deux parois latérales (43, 44) étant supérieure au diamètre de cercle d'interférence (55) de la pince pour pièce (17) pivotante de sorte qu'il soit possible de changer de pièce tout en étant protégé contre tout accès au sein de la zone de travail (48) lorsque la porte d'espace de travail est fermée (71).

2. Agencement selon l'une quelconque des revendications précédentes, **caractérisé en ce que** la pince pour pièce (17) est mobile dans le sens z au-delà d'une arête supérieure (72) au moins d'une paroi latérale (44) de sorte que la pince pour pièce (17) puisse être rentrée par le haut entre les parois latérales (43, 44).

3. Agencement selon l'une quelconque des revendications précédentes, **caractérisé par** un magasin d'outil (28), en particulier rotatif qui est disposé dans le sens y derrière le bloc (65) portant les pièces.

4. Agencement selon l'une quelconque des revendications précédentes, **caractérisé en ce que** le bloc (65) portant les pièces comporte un pont pivotant (20) logé sur les deux parois latérales (43, 44), pivotant autour du sens x, et comporte en particulier une table tournante porte-pièce (21) sur le pont pivotant (20).

5. Agencement selon l'une quelconque des revendications précédentes, **caractérisé en ce que** le changeur de pièce (1) comporte au moins un poste de chargement de pièce (3), en particulier avec une table de poste de chargement (34) rotative.

6. Agencement selon l'une quelconque des revendications précédentes, **caractérisé en ce que** le changeur de pièce (1) comporte au moins un poste de stockage de pièce (4).

7. Agencement selon l'une quelconque des revendications précédentes, **caractérisé en ce que** le changeur de pièce (1) comporte une plaque de base (41) indépendante du sol de l'atelier (64) et pouvant être placée sur le sol de l'atelier (64) et au moins un appui (8, 10), le longeron (5) étant monté à l'aide de l'appui (8, 10) sur la plaque de base (41).

8. Agencement selon l'une quelconque des revendications 5 à 7, **caractérisé en ce que** le poste de chargement de pièce (3) et/ou le poste de stockage de pièce (4) est monté sur la plaque de base (41).

9. Agencement selon l'une quelconque des revendications 7 ou 8, **caractérisé en ce que** la plaque de base (41) est fabriquée en béton, en particulier en béton au polymère, en particulier des pièces d'insertion (56) étant coulées dans le béton pour la fixation du longeron (5) et/ou du poste de chargement de pièce et/ou du poste de stockage de pièce (4).

10. Agencement selon l'une quelconque des revendications précédentes, **caractérisé en ce que** le centre d'usinage (2) vertical, en particulier le bâti de machine (19) comporte des patins de machine (36) antidérapants et antivibrations pour le placement sans ancrage sur le sol de l'atelier (64).

11. Agencement selon l'une quelconque des revendications 7 à 10, **caractérisé en ce que** le changeur de pièce (1) comporte au moins un autre appui (12) qui est réalisé pour l'appui direct du longeron (5) sur le sol de l'atelier (64).

12. Procédé d'usinage de pièces (32) avec un agencement selon la revendication 1, comportant les étapes suivantes :
- rentrée de la pince pour pièce (17) entre les deux parois latérales (43, 44) du centre d'usinage (2),
- dépôt d'une première pièce (32) dans le bloc (65) portant les pièces,
- usinage de la première pièce (32),
- réception de la première pièce (32) à l'aide de la pince pour pièce (17),
- pivotement de la pince pour pièce (17) autour du sens z dans et entre la paroi de séparation (50) côté arrière et la porte d'espace de travail (71) côté avant fermée, ainsi que dans et entre les deux parois latérales (43, 44),
- dépôt d'une seconde pièce (32) dans le bloc (65) portant des pièces, et
- usinage de la seconde pièce (32).
